# EUROPÄISCHE PATENTANMELDUNG

(11) **EP 1 498 167 A1**
(43) Veröffentlichungstag der Anmeldung: **19.01.2005**
(21) Anmeldenummer: 04016036.8
(22) Anmeldetag: 08.07.2004
(51) Int. Cl.: B01D 29/09

(54) **Vorrichtung zum Filtern von verunreinigten Flüssigkeiten, wie Kühlschmiermittel, insbesondere aus Werkzeugmaschinen**

(30) Priorität: 14.07.2003 DE 10331998
(71) Anmelder: KNOLL MASCHINENBAU GMBH, 88348 Saulgau (DE)
(72) Erfinder: Stocker, Toni, 88361 Altshausen (DE)
(74) Vertreter: Patentanwälte Eisele, Otten, Roth & Dobler

(57) **Zusammenfassung**

Es wird eine Vorrichtung zum Filtern von verunreinigten Flüssigkeiten, wie Kühlschmiermittel, insbesondere aus Werkzeugmaschinen mit einem verschiebbaren Filterband aus Filtermaterial vorgeschlagen, die eine gute und saubere Randabdichtung und somit einen hohen Reinheitsgrad der gefilterten Flüssigkeit bei geringem Verschleiß im Bereich der Randabdichtung gewährleistet. Dies wird erfindungsgemäß dadurch erreicht, dass im Randbereich des Filterbandes (19) eine Vorrichtung zur Zufuhr eines Sperrfluids vorgesehen ist, um einer Verschmutzung des Randbereichs des Filterbandes entgegenzuwirken.

## Beschreibung

Die Erfindung betrifft eine Vorrichtung zum Filtern von Flüssigkeiten nach dem Oberbegriff des Anspruchs 1.

Sogenannte Bandfilter zur Aufbereitung von Kühlschmiermitteln aus Werkzeugmaschinen, beispielsweise für spanabhebende Bearbeitungsverfahren wie Drehen, Fräsen, Schleifen etc. sind bereits im Handel erhältlich. Hierbei wird das zu reinigende Kühlschmiermittel durch ein Filterband gefiltert, das in gewissen Zeitabständen mit dem sich darauf ablagernden Filterkuchen weitergeschoben wird. Mit dem Vorschub des Filterbandes wird der herausgefilterte Filterkuchen zugleich ausgetragen.

Ein solches Filterband sollte nach Möglichkeit im Randbereich abgedichtet sein, eine Druckdifferenz zwischen beiden Seiten des Filterbandes zu ermöglichen, wobei das Eindringen von Verunreinigungen in den Bereich der gefilterten Flüssigkeit zu vermeiden ist, um den gewünschten Reinheitsgrad zu gewährleisten und einem durch die Verunreinigungen hervorgerufenen Verschleiß entgegenzuwirken. Hierzu werden bereits mitlaufende Dichtvorrichtungen beschrieben (vgl. DE 38 30 780 C2). Auch bei umlaufenden Dichtvorrichtungen kann das Eindringen von Verunreinigungen in den Randbereich nicht vermieden werden, was auch in diesem Fall zu einem Verschleiß bei entsprechenden Dichtvorrichtungen führen kann. Außerdem kann durch eine solche Verschmutzung im Bereich der Randabdichtung ein Widerstand gegen den Vorschub des Filterbandes oder im Falle beweglicher Abdichtelemente der entsprechenden Dichtvorrichtung entstehen. Im Extremfall kann es sogar zum Riss des Filterbandes kommen.

Aufgabe der Erfindung ist es, eine Vorrichtung zum Filtern einer verunreinigten Flüssigkeit vorzuschlagen, die eine gute und saubere Randabdichtung und somit einen hohen Reinheitsgrad der gefilterten Flüssigkeit bei geringem Verschleiß im Bereich der Randabdichtung gewährleistet.

Diese Aufgabe wird ausgehend von einer Vorrichtung der genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine Vorrichtung zum Filtern von verunreinigten Flüssigkeiten wie Kühlschmiermittel, insbesondere aus Werkzeugmaschinen mit einem verschiebbaren Filterband aus Filtermaterial dadurch aus, dass im Randbereich eines Filterbandes eine Vorrichtung zur Zufuhr eines Sperrfluids vorgesehen ist, um einer Verschmutzung des Randbereichs des Filterbandes entgegenzuwirken.

Der Erfindung liegt demnach die Erkenntnis zugrunde, dass das Eindringen von Verunreinigungen in den Bereich der Randabdichtung dadurch reduziert oder vermieden werden kann, dass ein Gegenstrom eines Sperrfluids in diesem Bereich aufgebaut wird. Ein solches Sperrfluid kann dabei gasförmig oder flüssig sein.

In einer vorteilhaften Ausführungsform der Erfindung wird ein Teil der gefilterten Flüssigkeit nach dem Filtrationsvorgang als Sperrfluid verwendet. Zum einen wird hierdurch der apparative Aufwand zur Bereitstellung des Sperrfluids reduziert, zum anderen findet keine Vermischung der zu reinigenden Flüssigkeit durch ein anderweitiges Sperrfluid statt.

Es hat sich in Versuchen gezeigt, dass der Randbereich eines solchen Filterbandes durch die Zufuhr eines Sperrfluids weitgehend sauber gehalten werden kann, wodurch sich eine dauerhafte Funktion entsprechender Elemente zur Randabdichtung ergibt und insbesondere ein Schmutzeintrag in die gereinigte Flüssigkeit um den Randbereich des Filterbandes herum weitestgehend unterbunden werden kann.

In einer Weiterbildung der Erfindung wird im Randbereich eine Führung des Filterbandes in einem Führungsspalt vorgesehen, in den die Zufuhrleitung des Sperrfluids mündet. Ein solcher Führungsspalt dient zugleich als Randabdichtung und Zuführeinheit für das erfindungsgemäße Sperrfluid. Das unter entsprechendem Druck zuführbare Sperrfluid verhindert das Eindringen verunreinigter, zu filternder Flüssigkeit in den Führungsspalt, so dass die Randabdichtung des Filterbandes zuverlässig erhalten bleibt.

Weiterhin wird in einer bevorzugten Ausführungsform eine Vorrichtung zur Beaufschlagung des Filterbandes mit einem Unterdruck auf der dem Filterkuchen gegenüberliegenden Seite des Filterbandes vorgesehen. Dies fördert zum einen den Flüssigkeitsdurchsatz unter Bildung eines Filterkuchens auf dem Filterband. Der Filterkuchen selbst verbessert die Filterfunktion des Filterbandes, da in der Regel die Durchgangsöffnungen des Filterkuchens kleiner sind als die Poren oder Durchgänge des Filterbandes. Oberhalb des Flüssigkeitspegels sorgt der in dieser Ausführungsform angelegte Unterdruck dafür, dass der Filterkuchen und das darunter liegende Filterband weitgehend abgetrocknet werden. Die Entsorgung des Filterkuchens wird hierdurch erheblich vereinfacht, da keine oder nur wenig Flüssigkeit in ihm enthalten sind.

Weiterhin wird in einer besonderen Ausführungsform der Erfindung eine Flüssigkeitspumpe zum Abzug der gefilterten Flüssigkeit vorgesehen. Diese Flüssigkeitspumpe stellt die gefilterte Flüssigkeit einer erneuten Verwendung oder einer Bevorratung in einem Vorratsbehälter zur Verfügung. Darüber hinaus kann im Falle der Verwendung der gereinigten Flüssigkeit als Sperrfluid diese Pumpe die Zufuhr des Sperrfluids in den Randbereich des Filterbandes vornehmen.

Durch das aktive Abpumpen der gereinigten Filterflüssigkeit wird darüber hinaus insbesondere in Verbindung mit einem Unterdruck oberhalb des Flüssigkeitspegels die Filterkapazität der erfindungsgemäßen Vorrichtung verbessert.

Grundsätzlich kann sowohl der Abzug der Flüssigkeit als auch der Unterdruck oberhalb des Flüssigkeitspegels mit einer Pumpe bewerkstelligt werden. Vorteilhafterweise wird jedoch eine separate Luftpumpe vorgesehen, um den Unterdruck über dem Flüssigkeitspegel der gefilterten Flüssigkeit herzustellen. Auf diese Weise ist das Abpumpen der gereinigten Flüssigkeit unabhängig von dem gewünschten Unterdruck oberhalb des Flüssigkeitspegels durchzuführen, wodurch der Betrieb der Vorrichtung und insbesondere deren Steuerung vereinfacht wird.

Vorteilhafterweise wird für die Erzeugung des Unterdrucks eine Unterdruckkammer mit einer wenigstens teilweise fluiddurchlässigen Wand vorgesehen, auf der das Filterband aufgelegt ist. Diese Unterdruckkammer, die sich vorzugsweise bis in die zu reinigende bzw. gereinigte Flüssigkeit hinein erstreckt und so auch als Ablaufkammer für gereinigte Flüssigkeit dient, ermöglicht den einfachen Anschluss einer Luftpumpe zur Erzeugung des Unterdrucks auf der dem Filterkuchen abgewandten Seite des Filterbandes. Die Auflage des Filterbandes auf einer wenigstens teilweise fluiddurchlässigen Wand verringert die mechanische Belastung des Filterbandes durch den beaufschlagten Unterdruck. Es können hierdurch auch weniger reißfeste Filterbänder verwendet werden. Darüber hinaus kann ein flexibles Filterband über eine größere Fläche mit Unterdruck beaufschlagt werden, ohne dass sich die Gefahr der Verformung des Filterbandes ergibt. Insbesondere wird durch die Formstabilität des Filterbandes auch dessen Randabdichtung gewährleistet.

Vorteilhafterweise schließt sich an die durchlässige Wand zur Auflage des Filterbandes in dessen Randbereich eine fluiddichte Randauflage an, die zugleich eine Seite eines Führungsspaltes für das Filterband bilden kann. Ein Sperrfluid, das in den Führungsspalt eingebracht wird, kann demnach nicht im Randbereich des Filterbandes auf die Unterdruckseite gelangen, sondern es muss zunächst von dem fluidundurchlässigen Bereich der Randauflage nach innen in den Bereich der fluiddurchlässigen Wand wandern, wobei es seine Sperrwirkung für verunreinigte Flüssigkeit entfalten kann, indem es diese verdrängt.

Weiterhin wird bevorzugt eine obere der Randauflage gegenüberliegende Randabdichtung im Randbereich des Filterbandes vorgesehen, um den gewünschten Führungsspalt herzustellen, der dann wie oben angeführt für die Zufuhr des Sperrfluids dienen kann.

Die obere Randabdichtung kann in Form von speziellen Niederhaltern für das Filterband vorgesehen werden, die aus einem entsprechenden, an das Filtermaterial angepassten Material bestehen können, so dass das Filterband gut zwischen der Randauflage und dem Niederhalter gleiten kann.

In einer bevorzugten Ausführungsform der Erfindung wird die Unterdruckkammer als Einschubkassette ausgeführt, die in eine Seitenführung einsetzbar ist. Eine solche Einschubkassette erleichtert die Montage und gegebenenfalls entsprechend erforderliche Wartungsmaßnahmen erheblich. Die Anordnung einer Unterdruckkammer als Einschubkassette bietet diese Vorteile im Hinblick auf die Montage und Wartung bzw. Austauschbarkeit generell, d.h. auch ohne die Verwendung eines erfindungsgemäßen Sperrfluids oder sonstiger oben angeführter Merkmale.

Eine solche Kassette kann darüber hinaus den Antrieb für das Filterband umfassen, beispielsweise indem endseitig eine entsprechende Antriebs- und Auflagewalze mit einem entsprechenden Motor und gegebenenfalls einem Zwischengetriebe angeordnet wird. Darüber hinaus kann eine solche Kassette mit oder ohne Verwendung eines Sperrfluids einen Sauganschluss für die Luft zur Erzeugung des Unterdrucks sowie einen Sauganschluss für den Abzug der gefilterten Flüssigkeit umfassen.

In einer Weiterbildung der Erfindung wird die Seitenführung der Filterkassette dergestalt ausgeführt, dass sich im Randbereich des Filterbandes zwischen der Kassette und der Seitenführung der Führungs- und/oder Abdichtspalt für das Filterband bildet. Dies ist beispielweise dadurch realisierbar, dass die Seitenführung die Oberseite der Filterkassette im Randbereich umfasst. Somit sind keine zusätzlichen Maßnahmen zur Herstellung einer erfindungsgemäßen Randabdichtung mit Führungsspalt erforderlich.

In einer Weiterbildung dieser Ausführungsform wird die Zufuhr des Sperrfluids über die Seitenführung der Einschubkassette vorgenommen. Zwischen der Seitenführung und der Einschubkassette bildet sich in eingesetztem Zustand einer solchen Kassette ein durch den über die Kassette und die Seitenführung gebildeten Führungs- und/oder Abdichtspalt begrenzter Raum, in den die Sperrflüssigkeit mit dem gewünschten Druck eingebracht werden kann.

Über die Höhe der Seitenführung kann der Druck für die Sperrflüssigkeit darüber hinaus hydrostatisch festgelegt werden, sofern die Seitenführung oben offen ist und so einen Überlauf bildet.

Im oberen Bereich ist die Verwendung der Sperrflüssigkeit nicht mehr oder nur weniger erforderlich, da hier der Filterkuchen bereits weitgehend abgesetzt und getrocknet ist.

In einer bestimmten Ausführungsform der Erfindung wird ein Einlaufbehälter für die zugeführte, zu reinigende Flüssigkeit vorgesehen, in den die durch das Filterband verschlossene Ablaufkammer für die gereinigte Flüssigkeit von oben hineinragt. Diese Ablaufkammer kann beispielsweise wie oben angeführt durch eine Einschubkassette gebildet werden, die zugleich als Unterdruckkammer dient.

Eine solche Anordnung einer Ablaufkammer sorgt in dem Bereich unterhalb des Flüssigkeitspegels der zu reinigenden Flüssigkeit bereits für eine Filtration aufgrund der Schwerkraft, sobald der Pegel in der Ablaufkammer aufgrund einer entsprechenden Abführung der gereinigten Flüssigkeit gesenkt wird.

Vorteilhafterweise wird hierbei eine Einströmöffnung in den Einlaufbehälter für die zu reinigende Flüssigkeit vorgesehen, die so gerichtet ist, dass sich eine Strömung der zu reinigenden Flüssigkeit zum Filterband hin ergibt. Ein solcher Flüssigkeitseinlass ist generell, d.h. auch unabhängig von einem oder mehreren der vorgenannten Merkmale insofern vorteilhaft, als durch diese Strömung das Absetzen von Verunreinigungen weitestgehend unterbunden wird. Dieses Merkmal stellt demnach auch für sich alleine bei verschiedenen Arten von Filteranlagen eine vorteilhafte Maßnahme zur Verringerung des apparativen Aufwandes dar. So können durch diese Maßnahme beispielsweise separate Austragvorrichtungen für abgelagerte Verunreinigungen entfallen.

Diese vorteilhafte Strömung wird beispielsweise dadurch erzielt, dass die Einströmöffnung bodenseitig vorgesehen ist, so dass sich eine Strömung der zu filternden Flüssigkeit im Bereich des Behälterbodens ergibt. Verunreinigungen, die die Tendenz haben, sich am Boden abzusetzen, werden durch eine solche im Wesentlichen bodennahe Strömung mitgerissen.

Weiterhin wird in dieser Ausführung der Strömungsführung bevorzugt eine Umlenkwand zur Umlenkung des Flüssigkeitsstrom nach oben vorgesehen .Mit der umgelenkten Flüssigkeit werden auch die darin enthaltenen Verunreinigungen nach oben mitgezogen.

Bevorzugt wird die Umlenkwand dabei so angebracht, dass die umgelenkte Flüssigkeitsströmung auf die Oberseite des Filterbandes gerichtet ist. Diese Strömungsführung sorgt dafür, dass die herauszufilternden Verunreinigungen mit der verunreinigten Flüssigkeit direkt auf das Filterband transportiert werden, wo sie sich aufgrund des Durchtritts der zu reinigenden Flüssigkeit durch das Filterband als Filterkuchen absetzen. Da der Filterkuchen mit dem verschiebbaren Filterband ausgetragen wird, erfolgt durch die beschriebene Art der Strömungsführung ein nahezu vollständiger Austrag der in der zu reinigenden Flüssigkeit enthaltenen Verunreinigungen, ohne dass in dem Einlaufbehälter weitere Maßnahmen zum Austrag der Verunreinigungen erforderlich sind.

Die gewünschte Flüssigkeitsströmung wird bevorzugt so ausgebildet, dass die Strömungsgeschwindigkeit für den Transport der Verunreinigungen in der Strömung ausreichend ist. Hierzu wird in einer besonderen Ausführungsform eine Querschnittsverjüngung in der Flüssigkeitsströmung vorgesehen, um die Strömung zu beschleunigen.

Die Einströmung der verunreinigten Flüssigkeit wird vorteilhafterweise auf der Rückseite der Ablauf und/oder Unterdruckkammer vorgenommen. Auf dieser Seite ist der Einlaufbehälter von außen in der gewünschten Richtung leicht zugänglich.

Die Querschnittsverjüngung zur Beschleunigung der Strömung kann bei dieser Anordnung der Einströmöffnung auf der Rückseite der Ablauf- und/oder Unterdruckkammer vorteilhafterweise dadurch bewerkstelligt werden, dass ein Spalt zwischen dem Behälterboden und der Ablauf- und/oder Unterdruckkammer bzw. dem Behälterboden und einem Führungsgehäuse für die Ablauf- und/oder Unterdruckkammer vorhanden ist. Dieser Spalt kann bereits ausreichen, um eine ausreichende Strömungsgeschwindigkeit zu erzeugen, wobei zusätzliche Maßnahmen entfallen können.

In einer besonderen Ausführungsform der Erfindung wird das Filterband als endlos umlaufendes Band ausgebildet. Ein endlos laufendes Filterband bietet den Vorteil eines Dauerbetriebs mit sehr großen Wartungsintervallen und wenig Verbrauchsmaterial. Der Aufwand beim Betrieb der Vorrichtung wird hierdurch erheblich verringert.

Um ein endlos umlaufendes Filterband zu verwenden, wird bevorzugt eine Abreinigungsvorrichtung für das Filterband mit Filterkuchen vorgesehen, um den Filterkuchen zu entnehmen, so dass das Filterband wieder verwendbar ist.

Hierzu wird in vorteilhafter Weise ein Abstreifelement vorgesehen, mittels dem der Filterkuchen bereits weitgehend vom Filterband entfernbar ist. Insbesondere im Falle eines getrockneten Filterkuchens durch einen Unterdruck wie oben angeführt, kann der abgestreifte Filterkuchen problemlos weiter entsorgt werden, beispielsweise verpresst und gegebenenfalls wiederverwertet werden.

In einer vorteilhaften Weiterbildung der Erfindung wird darüber hinaus eine Spüleinrichtung zum Abreinigen des Filterbandes vorgesehen. Durch eine flüssige Abreinigung des Filterbandes lässt sich dieses deutlich sauberer reinigen, als dies mit einem rein mechanischen Vorgang über das Abstreifelement möglich ist. Insbesondere in Kombination mit einem vorherigen Abstreifelement kann das Filterband hierbei gut aufbereitet werden, wobei der weitaus überwiegende Anteil der Verunreinigungen bereits nach dem Abstreifen in weitgehend trockener Form vorliegt.

Zur Abreinigung des Filterbandes mittels einer Spüleinrichtung wird vorteilhafterweise eine Spülwanne vorgesehen, durch die das Filterband hindurchgeführt werden kann und die verwendete Spülflüssigkeit auffängt.

Weiterhin wird vorteilhafterweise bei einer Spüleinrichtung für das Filterband eine Spülfluidzufuhr auf der dem Filterkuchen gegenüberliegenden Reinseite des Filterbandes vorgesehen. Diese Anordnung hat den Vorteil, dass das Spülfluid, das beispielsweise gereinigte Flüssigkeit aus der Ablaufkammer sein kann, das Filterband im Vergleich zur Strömungsrichtung bei der Filtration in entgegengesetzter Richtung durchströmt. Die Verunreinigungen werden demnach in entgegengesetzter Richtung aus dem Filterband ausgetragen, wie sie auf das Filterband aufgebracht wurden. Durch diese Spülrichtung ist eine bessere Reinigung des Filterbandes möglich.

Eine besonders vorteilhafte Abreinigung des Filterbandes ergibt sich weiterhin dadurch, dass eine Trocknungsvorrichtung für das durchgespülte Filterband vorgesehen wird. Nach dem Trocknungsvorgang liegt das Filterband in einer gesäuberten aufbereiteten Form vor, die einem neuen extern zugeführten Filtervlies sehr nahe kommt.

Eine Abreinigungsvorrichtung mit Spüleinrichtung und Trocknungsvorrichtung ist in der Lage, die beschriebenen Vorteile auch unabhängig von der erfindungsgemäßen Sperrfluidanordnung zu bewirken. Die sorgfältige Wiederaufbereitung des Filterbandes durch eine solche Vorrichtung ist daher auch isoliert von den oben angeführten Merkmalen denkbar.

Die Trocknung wird vorteilhafterweise durch eine Luftströmung vorgenommen, die in der gleichen Richtung erfolgt, wie die Spülung des Filterbandes, d.h. entgegengesetzt zur Filtrationsrichtung. Auf diese Weise können etwaige, nach der Spülung noch vorhandene Partikel während der Trocknung nachträglich entfernt werden, so dass sich neben der Trocknung eine zusätzliche Feinreinigungswirkung für das Filterband ergibt.

Weiterhin wird die Trocknung bevorzugt über einen Unterdruck auf der Seite des Filterbandes vorgenommen, auf der zuvor der Filterkuchen aufgelegen hat. Die Verwendung eines Unterdrucks ermöglicht beispielsweise eine Trocknung des Filterbandes, ohne die Spülwanne mit Druck zu beaufschlagen.

In einer Weiterbildung dieser Ausführungsform wird eine gemeinsame Luftpumpe für die Trocknung nach der Abreinigung des Filterbandes wie für die Trocknung des Filterkuchens nach der Filtration vorgesehen. Da in dieser besonderen Ausführungsform beide Saugprozesse mit derselben Unterdruckwelle vorgenommen werden, kann der Aufwand für die Herstellung und den Betrieb einer Filtervorrichtung gemäß der Erfindung durch die Verwendung einer gemeinsamen Luftpumpe, beispielsweise einer Turbine deutlich reduziert werden.

In einer besonderen Ausführungsform der Erfindung wird die Spüleinrichtung darüber hinaus mit einer Abzugsvorrichtung für den Abzug des Spülfluids aus der Spülwanne vorgesehen. Dieses Spülfluid kann entsorgt oder gegebenenfalls wieder aufbereitet werden.

In einer besonders vorteilhaften Ausführungsform der Erfindung wird, wie bereits oben angeführt, als Spülfluid die durch Filtration gereinigte Flüssigkeit, beispielsweise Kühlschmiermittel verwendet. In diesem Fall kann eine Aufbereitung des verunreinigten Spülfluids besonders vorteilhaft und mit geringem Aufwand dadurch bewerkstelligt werden, dass ein Zufluss des verunreinigten Spülfluids auf die Schmutzseite des Filterbandes im Bereich der Filtration der Flüssigkeit vorgenommen wird.

Grundsätzlich kann hierbei das Spülfluid unmittelbar in den Behälter für die zu reinigende Flüssigkeit eingeleitet werden. Eine besonders vorteilhafte Ausführungsform sieht jedoch einen Zufluss des verunreinigten Spülfluids auf den bereits abgesetzten Filterkuchen vor. Hierbei wird der Umstand genutzt, dass der Filterkuchen die Reinigungswirkung des Filterbandes verstärkt, d.h. die Porengröße des Filterkuchens ist in der Regel kleiner als die des sauberen Filterbandes. Da in der Abreinigung des Filterbandes verstärkt feinste Partikel in das Spülfluid gelangen, wird durch diese Maßnahme des Zuflusses auf den bereits abgesetzten Filterkuchen die vorteilhafte Wirkung des Filterkuchens zur Entfernung von Feinstpartikel in vorteilhafter Weise ausgenutzt.

Diese vorteilhafte Wirkung ist generell unabhängig von einem oder mehreren der oben genannten Merkmale immer dort erzielbar, wo ein Filterkuchen auf einem Filterband abgesetzt und anschließend eine Reinigung des Filterbandes mit Hilfe eines solchen Spülfluids vorgenommen wird.

In einer Weiterbildung der Vorrichtung mit Spülfluid-Zufluss auf den Filterkuchen wird dieser Zufluss bevorzugt oberhalb des Flüssigkeitspegels vorgenommen. Somit wird gewährleistet, dass das Spülfluid auf den Bereich des Filterkuchens gelangt, in dem er seine beste Filterwirkung entfalten kann. Darüber hinaus wird insbesondere in Verbindung mit dem oben angeführten Unterdruck zur Trocknung des Filterbandes das Spülfluid bzw. die Spülflüssigkeit schnell durch das Filterband hindurchgezogen, so dass sich die Spülflüssigkeit nicht nach unten in Richtung des noch nicht vollständig aufgebauten Filterkuchens bewegen kann.

Vorteilhaftweise wird weiterhin ein Füllstandsensor für den Einlaufbehälter vorgesehen, in den die zu reinigende Flüssigkeit eingebracht wird. Ein solcher Füllstandsensor dient zum einen zur Ansteuerung der Pumpe zum Abpumpen der gereinigten Flüssigkeit und zum anderen als Sicherheitsmaßnahme, um im Falle eines Defekts ein Überlaufen des Behälters zu verhindern.

Weiterhin wird bevorzugt ein getakteter Vorschub des Filterbandes vorgesehen, was den Vorteil hat, dass sich stets ein ausreichender Filterkuchen im gewünschten Maß auf dem Filterband aufbauen kann. Die Taktung des Vorschubs kann dabei vorteilhafterweise ebenfalls mit einem Füllstandsensor vorgenommen werden. In diesem Fall kann ein gemeinsamer Füllstandsensor zugleich zur Taktung des Filterbandvorschubs, der Steuerung der Flüssigkeitspumpe und/oder als Sicherheitsmaßnahme wie oben angeführt verwendet werden.

Neben der Verwendung eines umlaufenden Filterbandes kann eine erfindungsgemäße Vorrichtung auch mit einer Aufnahme für ein Vlies zum einmaligen Durchlauf von einer Vorratsrolle ohne Abreinigung versehen werden. In diesem Fall kann sich die Abreinigungseinrichtung erübrigen, wobei die sonstigen Vorteile erhalten bleiben.

In einer besonderen Ausführungsform der Erfindung wird eine umschaltbare Filterbandführung vorgesehen, die den wahlweisen Einsatz von einem endlosen Filterband oder einem Einmal-Vlies ermöglicht. Zum einen wird hierdurch die Flexibilität in der Anwendung vergrößert. Je nach Einsatzzweck kann das gewünschte Filtermaterial problemlos eingesetzt werden. Darüber hinaus bietet eine solche Ausführung den Vorteil, dass beim Betreiber der Filtervorrichtung einem Defekt durch Reißen des Endlosfilterbandes dadurch entgegengewirkt werden kann, dass in diesem Fall das Endlos-Filterband entnommen und ein zu diesem Zweck bevorratetes Einmal-Vlies eingeführt wird. Die Vorrichtung kann somit zumindest soweit weiterbetrieben werden, bis eine entsprechende Wartungsperson vor Ort die Vorrichtung wieder mit dem Endlos-Filterband instand setzen kann.

Grundsätzlich ist auch der Einsatz eines Einmal-Vlieses in Verbindung mit der Abreinigungsvorrichtung denkbar. Ein solches Vlies kann anschließend wieder bevorratet werden, um beim nächsten Defekt des Endlos-Filterbandes erneut zum Einsatz zu kommen.

Im Falle der dauerhaften Verwendung von Einweg-Vliesen bietet die Abreinigung wie oben beschrieben darüber hinaus den Vorteil, dass die Endsorgung eines gebrauchten Vlieses erheblich einfacher und damit kostengünstiger zu bewerkstelligen ist.

Der Nutzen und die Vorteile der Erfindung lassen sich abschließend nochmals wie folgt zusammenfassen.

Die mittels der erfindungsgemäßen Sperrflüssigkeit und der dadurch sich ergebenden guten Randabdichtung des Filterbandes mögliche hohe Druckdifferenz zwischen Schmutztank und Filterkammer bzw. Unterdruckkammer ermöglichen eine hohe spezifische Filterleistung mit dickem Filterkuchen. Insbesondere ergibt sich hieraus ein geringer Platzbedarf, ein hoher Reinheitsgrad sowie lange Taktintervalle im Vorschub des Filterbands bzw. daraus resultierend ein geringer Vliesverbrauch bei Verwendung eines einmal durchlaufenden Vlieses.

Die bodenseitige Einströmung der Schmutzflüssigkeit verhindert Ablagerungen ohne separate Austragvorrichtung. Hieraus ergibt sich ein geringer Wartungs- und Pflegeaufwand.

Das Filterband wird über die gesamte Austragsstrecke von Luft durchströmt, wodurch sich ein problemloser Austrag von Spänen, auch von Leichtmetall bei geringer Restfeuchte des Schlamm-/Späneaustrag ergibt.

Die Abdichtung mit Hilfe von Sperrflüssigkeit verhindert das Eindringen von Schmutz und Spänen in die Filterkammer, womit ein hoher Reinheitsgrad bei geringer mechanischer Belastung im Randbereich und somit eine Vermeidung der Reißgefahr des Filterbandes in diesem Bereich verbunden ist.

Die Aufbereitung des Filterbandes bzw. Vlieses mit Abstreifer, Rückspülung und Bandtrockner ergibt ein sauberes und trockenes Filterband nach dem Filterprozess. Hieraus resultieren lange Standzeiten bei Verwendung eines Endlosfilterbandes bzw. eine Mehrfach-Verwendungsmöglichkeit eines einmal durchlaufenden Vlieses. Auch eine günstigere Entsorgung bei geringem Entsorgungsgewicht eines solchen Vlieses wird hierdurch gewährleistet.

Die Rückführung der rückgespülten Spülflüssigkeit auf den Filterkuchen verhindert das erneute Einbringen von Schmutz in den Filterprozess. Durch die Nutzung der feinen Poren des Filterkuchens wird eine Aufkonzentrierung durch Feinstpartikel verhindert. Es ergibt sich hieraus wiederum ein hoher Filter-Wirkungsgrad mit langen Taktzeiten.

Durch die Verwendung eines Flüssigkeits- bzw. Tropfenabscheiders in der Saugleitung des Verdichters ergibt sich eine weitgehend trockene Abluft mit weitestgehend reduziertem Ölnebel.

Die Ausgestaltung der Filterkammer bzw. Unterdruckkammer als Einschubkassette ermöglicht einen einfachen Wechsel des Filterbandes sowie eine erhebliche Erleichterung bei Reparatur und Wartung der Einschubkassette.

Ein Ausführungsbeispiel der Erfindung ist in der Zeichnung dargestellt und wird anhand der Figuren nachfolgend näher erläutert.

Im Einzelnen zeigen
- Figur 1: eine perspektivische Ansicht einer erfindungsgemäßen Filtervorrichtung,
- Figur 2: eine schematische Schnittdarstellung durch eine Vorrichtung gemäß Figur 1,
- Figur 3: einen Querschnitt entlang Schnittlinie III in Figur 2,
- Figur 4: eine Ausschnittsvergrößerung aus Figur 3,
- Figur 5: eine perspektivische Darstellung der Filtereinheit aus einer Vorrichtung gemäß Figur 1,

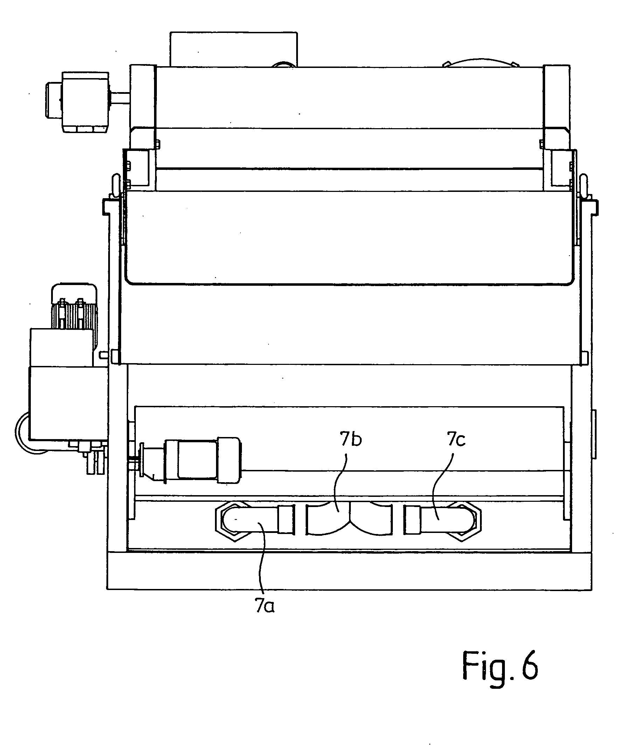

- Figur 6: eine Seitenansicht einer Vorrichtung gemäß Figur 1,
- Figur 7: eine Ausschnittsvergrößerung in schematischer Schnittdarstellung einer Abreinigungsvorrichtung,
- Figur 8: eine Vorrichtung gemäß Figur 1 in der Seitenansicht,

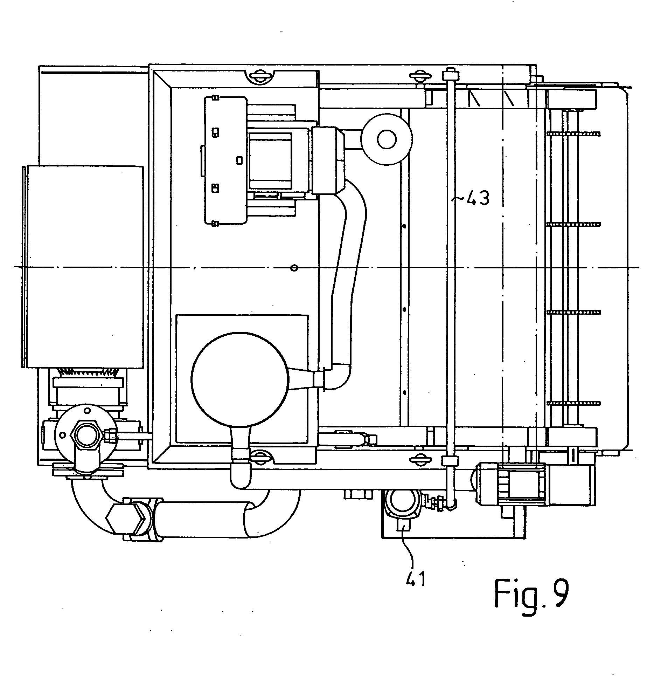

- Figur 9: eine Vorrichtung gemäß Figur 1 in der Draufsicht und
- Figur 10: eine schematische Schnittdarstellung der gesamten Filtervorrichtung.

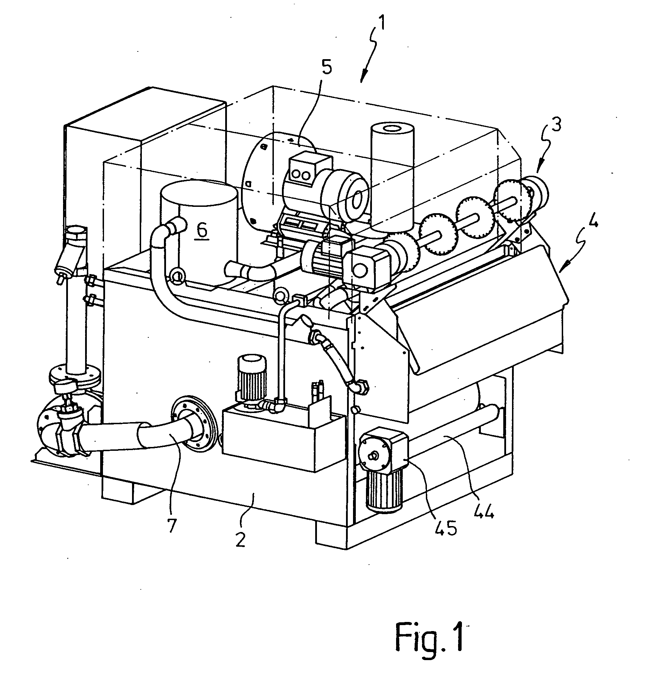

Die Filtervorrichtung 1 gemäß Figur 1 umfasst ein Gehäuse 2, an dem verschiedene Komponenten angebaut sind.

Erkennbar in der perspektivischen Darstellung ist beispielsweise das obere Ende einer Einschubkassette 3 in seinem hinteren, aus dem Gehäuse 2 herausragenden Bereich. Weiterhin ist eine Abreinigungsvorrichtung 4 erkennbar.

Auf der Oberseite ist ein Verdichter 5 mit einem vorgeschalteten Tropfenabscheider 6 dargestellt, deren Funktion nachfolgend näher erläutert wird.

Seitlich ist ein Flüssigkeitseinlauf 7 ins Innere des Gehäuses 2 erkennbar.

Im Folgenden wird auf die einzelnen Baueinheiten näher eingegangen.

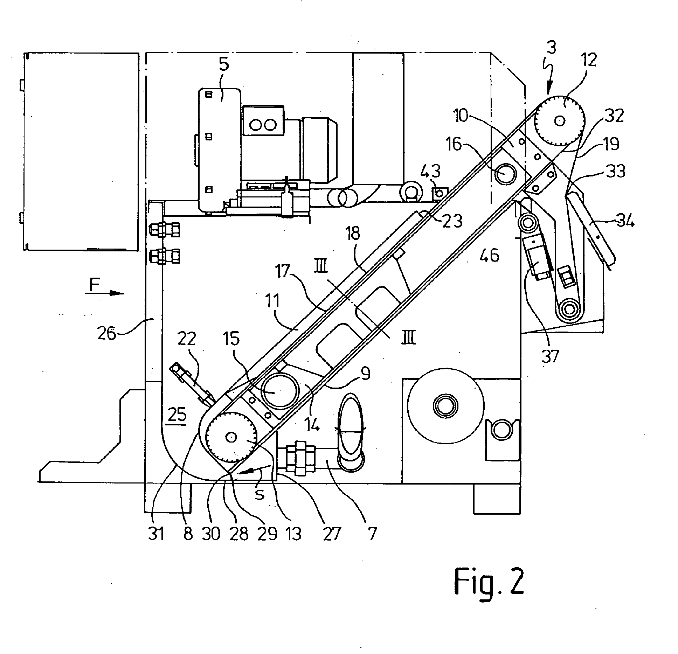

In Figur 2 ist die Einschubkassette 3 in der Schnittdarstellung erkennbar. Sie befindet sich in einem Führungsgehäuse 8 mit geschlossenem Boden 9, geschlossenen Seitenwänden 10 und oberen Randabdeckungen 11. Die Filtereinschubkassette 3 umfasst zwei Antriebs- und Umlenkwalzen 12, 13 für ein nicht näher dargestelltes umlaufendes Filterband. Weiterhin umfasst die Einschubkassette eine kastenförmige Unterdruckkammer 14, die über eine untere Anschlussöffnung 15 mit einer Flüssigkeitspumpe und über eine obere Anschlussöffnung 16 mit dem Verdichter 5 zu verbinden ist. Über den Verdichter 5 wird das Innere der Unterdruckkammer 14 mit einem Unterdruck beaufschlagt.

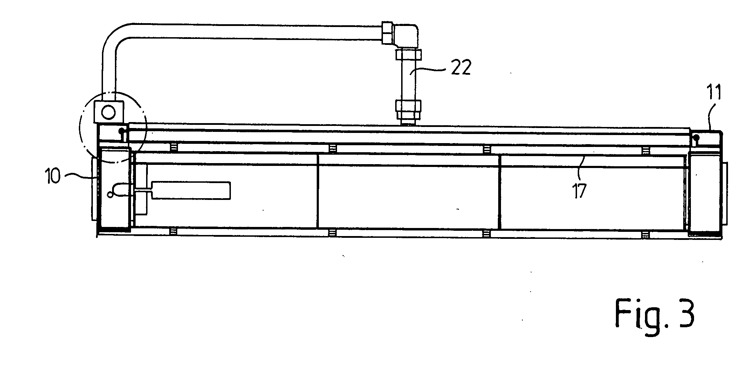

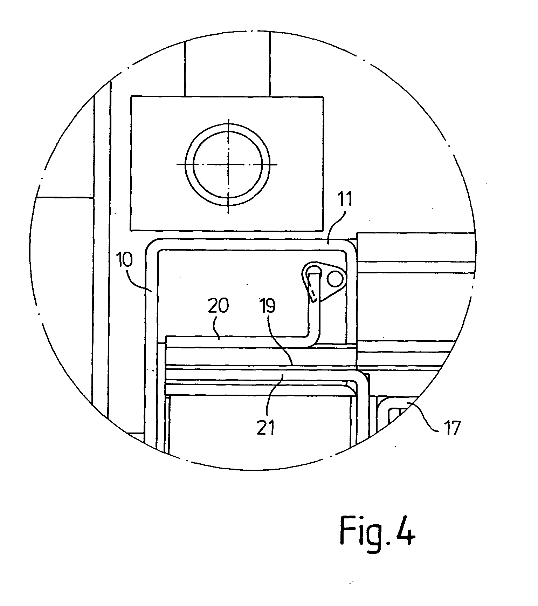

Die Oberseite der Unterdruckkammer 14 ist verschlossen. Zwischen einer undurchlässigen Randauflage 21 und den Randabdeckungen 11 ergibt sich ein Führungsspalt 18, in dem das um die Antriebs- und Umlenkwalzen 12, 13 verlaufende Filterband 19 geführt ist. In dieser Ausführungsform ist das Siebblech 17 vor der Randauflage 21 nach unten abgebogen und von der Randauflage 21 separat ausgebildet. In der Darstellung gemäß Figur 3 und 4 sind die Seitenwände 10 des Führungsgehäuses 8 sowie die Randabdeckungen 11 deutlich erkennbar. In den Randabdeckungen 11 sind federelastisch aufgehängte Niederhalter 20 dargestellt, die das Filterband 19 gegen die Randauflage 21 drücken.

Weiterhin ist eine Zuleitung 22 für ein Sperrfluid in den Figuren 2 und 3 erkennbar, das beispielsweise die gefilterte, über die Anschlussöffnung 15 abgezogene Flüssigkeit sein kann. Im Führungsgehäuse 8 kann sich die Sperrflüssigkeit bzw. das Sperrfluid bis zum oberen Rand 23 der Randabdeckung 11 aufstauen, so dass sich ein hydrostatischer Druck ergibt, der das Sperrfluid von der Randabdeckung 21 her nach innen durch das Filterband 19 drückt.

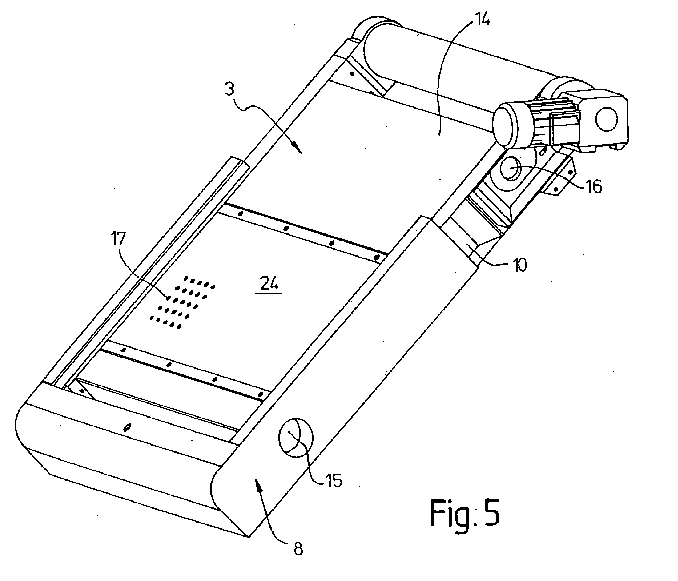

Die einzelnen beschriebenen Komponenten der Einschubkassette 3 sowie das Führungsgehäuse 8 sind in Figur 5 in perspektivischer Darstellung wiedergegeben. Insbesondere ist der Filterbereich 24 mit dem Siebblech 17 erkennbar, in dem die zu reinigende Flüssigkeit durch das Filterband und das Siebblech 17 ins Innere der Unterdruckkammer 14 der Einschubkassette 3 gelangen kann.

Die Einschubkassette 3 ragt, wie in Figur 2 erkennbar ist, schräg nach unten in einen Einlaufbehälter 25, der zur Aufnahme der zu reinigenden Flüssigkeit bestimmt ist. Der Einlaufbehälter 25 ist durch das Führungsgehäuse 8, nicht näher dargestellte Seitenwände einer Vorderwand 26 und einer weniger hohen, sich bis zum Führungsgehäuse 8 erstreckenden Rückwand 27 begrenzt. Über die Rückwand 27 ist die Schmutzflüssigkeitszufuhr 7 an den Einlaufbehälter 25 angeschlossen. Der Schmutzflüssigkeitszufluss 7 ist in drei nebeneinander angeordnete Zuflussöffnungen 7a, b, c verzweigt, so dass sich eine möglichst breit verteilte Einlassströmung S ergibt. Die Strömung ist zur Vorderseite 26 hin gerichtet und verläuft zunächst einmal im Bodenbereich 28 des Einlaufbehälters 25. Zwischen dem Boden 28 und der Unterkante 29 des Führungsgehäuses 8 ergibt sich ein Beschleunigungsspalt 30, in dem die Strömung aufgrund der Querschnittsverjüngung beschleunigt wird. Danach folgt die Strömung dem Boden 28, der in eine Rundung 31 übergeht, so dass die Strömung nach oben abgelenkt wird. Hierdurch gelangt die zu reinigende Flüssigkeit auf die Oberseite der Einschubkassette 3, wobei weitgehend alle Verunreinigungen in der Strömung mitgeführt werden.

Der Flüssigkeitspegel kann beispielsweise bis zur Marke F in dem Behälter 25 stehen. Auf diese Weise gelangt die zu reinigende Flüssigkeit in den Filterbereich 24. Sobald über eine Saugpumpe durch die Saugöffnung 15 gereinigte Flüssigkeit abgezogen wird, folgt die Flüssigkeit durch das Siebblech 17 nach, wobei sich ein Filterkuchen auf dem darüber befindlichen Filterband 19 bildet. Das Filterband 19 kann dabei auf einer mit dem Filterband bewegbaren fluidtransparenten und mechanisch stabilen Unterlage, wie einem Gliederband 32 abgelegt werden, um eine übermäßige mechanische Beanspruchung zu vermeiden.

Zugleich wird über die obere Saugöffnung 16 mittels des Verdichters 5 ein Unterdruck im Inneren der Unterdruckkammer 14 erzeugt. Der Filterkuchen, der sich oberhalb des Pegels F der zu reinigenden Flüssigkeit befindet, wird demnach durch die Luftströmung, die sich aufgrund des Unterdrucks bildet, getrocknet.

Das Filterband 19 wird schubweise umlaufend bewegt. Somit gelangt der trockene Filterkuchen zu einem Abstreifer 33, wo er abgestreift und über eine Rutsche 34 einem nicht näher dargestellten Auffangbehälter zugeführt wird.

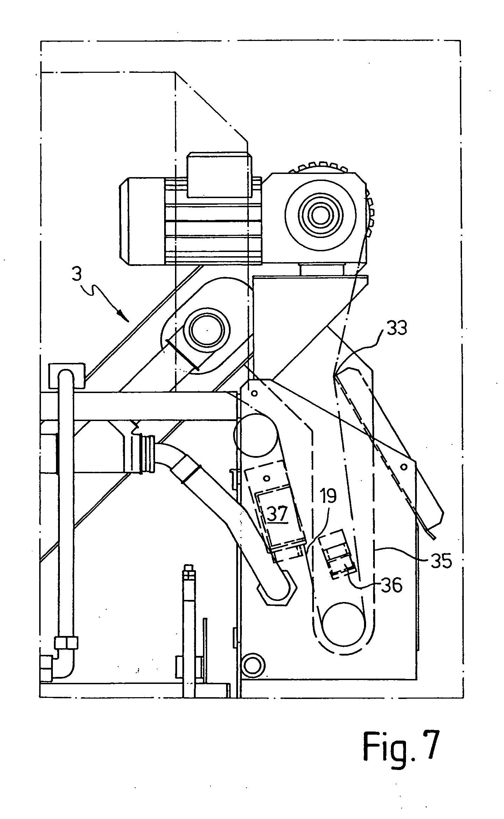

Nach dem Abstreifen des Filterkuchens am Abstreifer 33 gelangt das Filterband in eine Abreinigungswanne 35 (vgl. auch Figur 7). Eine Spüleinheit 36 spült das Filterband 19, wobei darauf hinzuweisen ist, dass die Ausspülung des Filterbandes 19 von der sauberen Seite, d.h. der Seite, die ursprünglich der Unterdruckkammer 14 zugewandt war, erfolgt. Der Schmutzaustrag aus dem Filterband 19 erfolgt demnach in umgekehrter Richtung wie der Schmutzeintrag bei der Filtration im Filterbereich 24.

Die von der Spüleinheit 36 abgegebene Spülflüssigkeit wird nach der Spülung des Filterbands 19 in der Abreinigungswanne 35 aufgefangen.

Anschließend gelangt das Filterband 19 vor einen Trockenraum 37, der wiederum mit einem Unterdruck beaufschlagt ist. Hierdurch wird das Filterband getrocknet, wobei hierbei die gleiche Strömungsrichtung vorherrscht wie beim Spülvorgang über die Spüleinheit 36. Anschließend verläuft das Filterband auf der Unterseite des Filtereinschubs 3 wieder nach unten bis hin zur Antriebs- und Umlenkwalze 13.

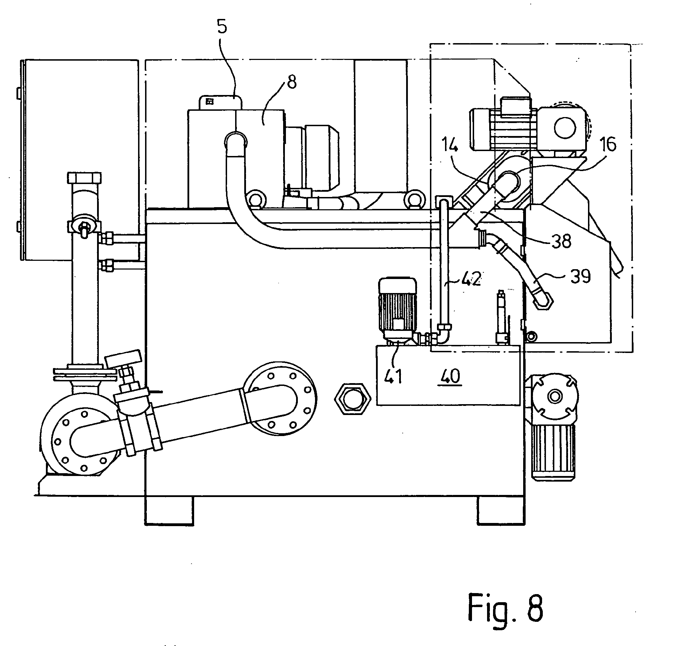

In Figur 8 ist gut erkennbar, dass die Unterdruckkammer 14, die über die Saugleitung 38 und die Saugöffnung 16 mit Unterdruck beaufschlagt wird, mit einer Saugleitung 39 verbunden wird, die zum Trockenraum 37 führt.

Die Absaugung durch das Filterband 19 bewirkt, dass in den Saugleitungen 38, 39 keine trockene Luft vorliegt, sondern sich ein Gemisch mit Flüssigkeitströpfchen bildet. Diese Tröpfchen werden im Tropfenabscheider 6 abgeschieden, so dass im Verdichter 5 weitgehend trockene Luft ankommt.

Die Abreinigungswanne 35 ist auf nicht näher dargestellte Weise mit einem Sammelbehälter 40 verbunden, aus dem mittels einer Pumpe 41 die mit Feinstpartikeln verunreinigte Spülflüssigkeit in eine Steigleitung 42 und von dort in einen Sprüharm 43 gefördert wird. Entlang dem Sprüharm 43 wird die Spülflüssigkeit oberhalb des Flüssigkeitspegels F dort auf das Filterband aufgesprüht, wo der Filterkuchen die beste Filterwirkung bewirkt. Der Filterkuchen weist kleinere Porenöffnungen als das saubere Filterband auf, so dass an dieser Stelle die Flüssigkeit optimal aufbereitet werden kann.

In Figur 1 ist weiterhin eine untere Aufnahmewalze 44 mit Antriebs- und Getriebeeinheit 45 erkennbar, die zur Aufnahme eines nicht umlaufenden und somit die Vorrichtung 1 pro Gebrauch nur einmal durchlaufenden Vlieses dient, das anstelle des Umlaufbandes 19 in die Vorrichtung 1 eingeführt werden kann. Sofern dies ohne Abreinigung bzw. Trocknung im Trockenraum 37 erfolgen soll, ist eine Umstellung der Führungsrolle 46 in eine höhere Position hierbei denkbar, um das Filtervlies von der Oberseite her zwischen Filtereinschub 3 und Führungsgehäuse 8 einzuführen. Bei dieser Vorgehensweise muss das verschmutzte Vlies anschließend entsorgt oder anderweitig aufbereitet werden. Die Aufbereitung eines solchen von einer Vorratsrolle abgezogenen und nach dem Gebrauch auf einer Rolle aufgewickelten Vlieses kann jedoch auch in der Abreinigungseinheit wie oben angeführt vorgenommen werden. Das Vlies kann dadurch mehrfach verwendet werden und/oder wesentlich einfacher und kostengünstiger entsorgt werden.

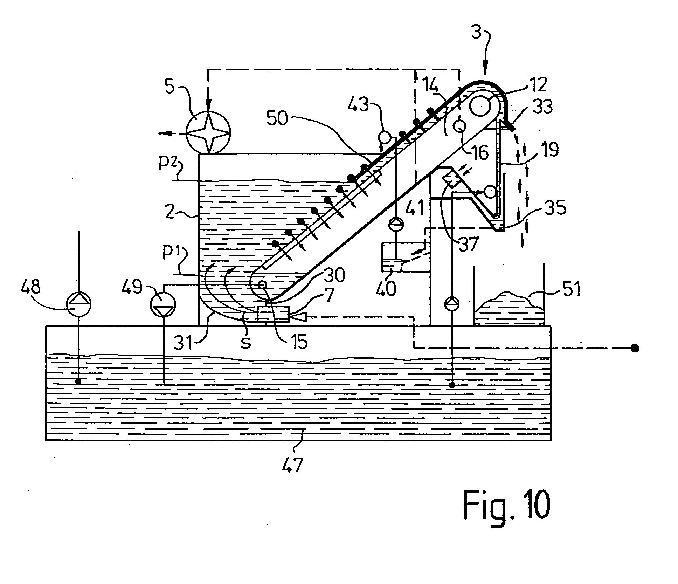

In der schematischen Darstellung gemäß Figur 10 ist neben den bereits beschriebenen Komponenten ein Reintank 47 zur Aufnahme von gereinigter bzw. gefilterter Flüssigkeit vorgesehen. Mittels einer Versorgungspumpe 48 kann die gereinigte Flüssigkeit einer erneuten Verwendung, beispielsweise einer Werkzeugmaschine zugeführt werden.

Weiterhin ist in Figur 10 die Flüssigkeitspumpe 49 erkennbar, mittels der die gereinigte bzw. gefilterte Flüssigkeit aus der Unterdruckkammer 14 in den Reintank 47 gepumpt wird.

In der Darstellung gemäß Figur 10 ist gut erkennbar, wie der Durchtritt der Flüssigkeit durch das Filterband 19 bereits aufgrund der Schwerkraft stattfindet. Die beiden Flüssigkeitspegel p*1* in der Unterdruckkammer 14 sowie p*2* in dem Gehäuse 2 veranschaulichen diese Wirkung der Schwerkraft deutlich.

Weiterhin ist in Figur 10 der Filterkuchen 50 auf dem Filterband 19 erkennbar. Oberhalb des Flüssigkeitspegels p2 ergibt sich eine Trocknungsstrecke, auf der, wie bereits oben angeführt, über den Sprüharm 43 die Spülflüssigkeit aus der Abreinigungswanne 35 bzw. im Sammelbehälter 40 aufgesprüht wird.

In Figur 10 ist weiterhin gut erkennbar dargestellt, wie der Filterkuchen 50 über den Abstreifer 33 abgestreift wird und in einem Schlamm-/Spänekasten 51 aufgefangen wird.

### Bezugszeichenliste:

- 1: Filtervorrichtung
- 2: Gehäuse
- 3: Einschubkassette
- 4: Abreinigungsvorrichtung
- 5: Verdichter
- 6: Tropfenabscheider
- 7: Flüssigkeitseinlauf
- 8: Führungsgehäuse
- 9: Boden
- 10: Seitenwand
- 11: Randabdeckung
- 12: Antriebs- und Umlenkwalze
- 13: Antriebs- und Umlenkwalze
- 14: Unterdruckkammer
- 15: Saugöffnung
- 16: Saugöffnung
- 17: Siebblech
- 18: Führungsspalt
- 19: Filterband
- 20: Niederhalter
- 21: Randauflage
- 22: Zuleitung
- 23: Rand
- 24: Filterbereich
- 25: Behälter
- 26: Vorderwand
- 27: Rückwand
- 28: Boden
- 29: Unterkante
- 30: Beschleunigungsspalt
- 31: Rundung
- 32: Gliederband
- 33: Abstreifer
- 34: Rutsche
- 35: Abreinigungswanne
- 36: Spüleinheit
- 37: Trockenraum
- 38: Saugleitung
- 39: Saugleitung
- 40: Sammelbehälter
- 41: Pumpe
- 42: Steigleitung
- 43: Sprüharm
- 44: Aufnahmewalze
- 45: Antriebs- und Getriebeeinheit
- 46: Umlenkrolle
- 47: Reintank
- 48: Versorgungspumpe
- 49: Flüssigkeitspumpe
- 50: Filterkuchen
- 51: Schlamm-/Spänekasten

## Patentansprüche

1. Vorrichtung zum Filtern von verunreinigten Flüssigkeiten wie Kühlschmiermittel insbesondere aus Werkzeugmaschinen mit einem verschiebbaren Filterband aus Filtermaterial, **dadurch gekennzeichnet, dass** im Randbereich des Filterbandes (19) eine Vorrichtung (8, 18) zur Zufuhr eines Sperrfluids vorgesehen ist, um einer Verschmutzung des Randbereichs des Filterbandes (19) entgegenzuwirken.

2. Vorrichtung nach Anspruch 1, **dadurch gekennzeichnet, dass** im Randbereich eine Führung des Filterbandes (19) in einem Führungsspalt (19) vorgesehen ist, der mit Sperrfluid bestromt ist.

3. Vorrichtung nach einem der vorgenannten Ansprüche, **dadurch gekennzeichnet, dass** eine Vorrichtung (5, 14) zur Beaufschlagung des Filterbandes (19) mit einem Unterdruck auf der dem Filterkuchen gegenüberliegenden Seite des Filterbandes (19) vorgesehen ist.

4. Vorrichtung nach einem der vorgenannten Ansprüche, **dadurch gekennzeichnet, dass** ein Flüssigkeitspumpe zum Abzug von gefilterter Flüssigkeit vorgesehen ist.

5. Vorrichtung nach einem der vorgenannten Ansprüche, **dadurch gekennzeichnet, dass** eine Luftpumpe (3) zur Erzeugung eines Unterdrucks oberhalb des Flüssigkeitspegels (F) vorgesehen ist.

6. Vorrichtung nach einem der vorgenannten Ansprüche, **dadurch gekennzeichnet, dass** eine Unterdruckkammer (14) mit einer wenigstens teilweise fluiddurchlässigen Wand (17) vorgesehen ist, auf der das Filterband (19) aufliegt.

7. Vorrichtung nach einem der vorgenannten Ansprüche, **dadurch gekennzeichnet, dass** eine fluiddichte Randauflage (21) des Filterbandes (19) in dessen Randbereich vorgesehen ist, die eine Seite des Führungsspaltes (18) für das Filterband bildet.

8. Vorrichtung nach einem der vorgenannten Ansprüche, **dadurch gekennzeichnet, dass** eine obere Randabdichtung im Randbereich des Filterbandes (19) vorgesehen ist.

9. Vorrichtung, insbesondere nach einem der vorgenannten Ansprüche, **dadurch gekennzeichnet, dass** die Unterdruckkammer (14) als Einschubkassette (3) ausgeführt ist, die in eine Führung (8) einsetzbar ist.

10. Vorrichtung nach einem der vorgenannten Ansprüche, **dadurch gekennzeichnet, dass** die Einschubkassette (3) einen Antrieb für das Filterband (19) umfasst.

11. Vorrichtung nach einem der vorgenannten Ansprüche, **dadurch gekennzeichnet, dass** die Führung der Einschubkassette als oben offenes Führungsgehäuse (8) ausgebildet ist.

12. Vorrichtung nach einem der vorgenannten Ansprüche, **dadurch gekennzeichnet, dass** das Führungsgehäuse (8) eine Randabdeckung (11) für die Abdeckung des Filterbandes (19) im Randbereich aufweist.

13. Vorrichtung nach einem der vorgenannten Ansprüche, **dadurch gekennzeichnet, dass** die Randabdeckung (11) die obere Wand (20) eines Führungs- und/oder Abdichtspaltes (18) für das Filterband (19) umfasst.

14. Vorrichtung nach einem der vorgenannten Ansprüche, **dadurch gekennzeichnet, dass** die Zufuhr des Sperrfluids über das Führungsgehäuse (8) vorgesehen ist.

15. Vorrichtung nach einem der vorgenannten Ansprüche, **dadurch gekennzeichnet, dass** ein Einlaufbehälter (25) für zu reinigende Flüssigkeit vorgesehen ist.

16. Vorrichtung nach einem der vorgenannten Ansprüche, **dadurch gekennzeichnet, dass** das Führungsgehäuse (8) für die den Einschubkassette (3) einen Teil der Wandung des Einlaufbehälters (25) für die zu reinigende Flüssigkeit bildet.

17. Vorrichtung nach einem der vorgenannten Ansprüche, **dadurch gekennzeichnet, dass** eine durch das Filterband (19) verschlossene Ablaufkammer (14) für gereinigte Flüssigkeit vorgesehen ist, die in den Einlaufbehälter (25) hineinragt.

18. Vorrichtung, insbesondere nach einem der vorgenannten Ansprüche, **dadurch gekennzeichnet, dass** in dem Einlaufbehälter (25) eine nach oben gerichtete Strömung der zu reinigenden Flüssigkeit vorgesehen ist.

19. Vorrichtung nach einem der vorgenannten Ansprüche, **dadurch gekennzeichnet, dass** eine Einströmöffnung im Bodenbereich des Einlaufbehälters (25) vorgesehen ist, die so gerichtet ist, dass sich eine Strömung der zu reinigenden Flüssigkeit im Bereich des Bodens (28) des Einlaufbehälters ergibt.

20. Vorrichtung nach einem der vorgenannten Ansprüche, **dadurch gekennzeichnet, dass** eine Umlenkwand (31) zur Umlenkung des Flüssigkeitsstroms vorgesehen ist.

21. Vorrichtung nach einem der vorgenannten Ansprüche, **dadurch gekennzeichnet, dass** die umgelenkte Flüssigkeitsströmung auf die Oberseite des Filterbandes (19) gerichtet ist.

22. Vorrichtung nach einem der vorgenannten Ansprüche, **dadurch gekennzeichnet, dass** eine Querschnittsverjüngung (30) zur Beschleunigung der Flüssigkeitsströmung der zu reinigenden Flüssigkeit vorgesehen ist.

23. Vorrichtung nach einem der vorgenannten Ansprüche, **dadurch gekennzeichnet, dass** ein Zufluss für die zu reinigende Flüssigkeit (7) auf der rückseitig zur Filteroder Abzugskammer (14) angeordneten Rückwand (27) des Behälters (25) erfolgt.

24. Vorrichtung nach einem der vorgenannten Ansprüche, **dadurch gekennzeichnet, dass** die Querschnittsverjüngung durch einen Spalt (30) zwischen dem Boden (28) des Behälters (25) und der Führung (8) bzw. der Filter- und/oder Abzugskammer (14) vorgesehen ist.

25. Vorrichtung nach einem der vorgenannten Ansprüche, **dadurch gekennzeichnet, dass** das Filterband (19) ein endlos umlaufendes Band ist.

26. Vorrichtung nach einem der vorgenannten Ansprüche, **dadurch gekennzeichnet, dass** eine Abreinigungsvorrichtung (4) zur Entfernung des Filterkuchens von dem Filterband (19) vorgesehen ist.

27. Vorrichtung nach einem der vorgenannten Ansprüche, **dadurch gekennzeichnet, dass** ein Abstreifelement (33) vorgesehen ist.

28. Vorrichtung nach einem der vorgenannten Ansprüche, **dadurch gekennzeichnet, dass** eine Spüleinrichtung (36) zum Abreinigen des Filterbandes (19) vorgesehen ist.

29. Vorrichtung nach einem der vorgenannten Ansprüche, **dadurch gekennzeichnet, dass** die Spüleinrichtung eine Abreinigungswanne (35) umfasst.

30. Vorrichtung nach einem der vorgenannten Ansprüche, **dadurch gekennzeichnet, dass** die Spüleinrichtung eine Spülfluidzufuhr (36) auf der dem Filterkuchen abgewandten Seite des Filterbandes (19) umfassen.

31. Vorrichtung, insbesondere nach einem der vorgenannten Ansprüche, **dadurch gekennzeichnet, dass** eine der Spüleinrichtung nachgeschaltete Trocknungsvorrichtung (37) für das gespülte Filterband (19) vorgesehen ist.

32. Vorrichtung nach einem der vorgenannten Ansprüche, **dadurch gekennzeichnet, dass** die Trocknungsvorrichtung (37) eine Luftströmung umfasst.

33. Vorrichtung nach einem der vorgenannten Ansprüche, **dadurch gekennzeichnet, dass** die Trocknung über einen mit Unterdruck beaufschlagten Trockenraum (37) vorgesehen ist.

34. Vorrichtung nach einem der vorgenannten Ansprüche, **dadurch gekennzeichnet, dass** eine gemeinsame Unterdruckpumpe (5) für die Trocknung nach der Abreinigung sowie für die Trocknung des Filterkuchens nach der Filtration vorgesehen ist.

35. Vorrichtung nach einem der vorgenannten Ansprüche, **dadurch gekennzeichnet, dass** die Spüleinheit (36) eine Spülfluidabfuhr umfasst.

36. Vorrichtung, insbesondere nach einem der vorgenannten Ansprüche, **dadurch gekennzeichnet, dass** ein Zufluss (43) von verunreinigtem Spülfluid auf den auf dem Filterband (19) abgesetzten Filterkuchen vorgesehen ist.

37. Vorrichtung nach einem der vorgenannten Ansprüche, **dadurch gekennzeichnet, dass** der Zufluss des verunreinigten Spülfluids oberhalb des Flüssigkeitspegels (F) vorgesehen ist.

38. Vorrichtung nach einem der vorgenannten Ansprüche, **dadurch gekennzeichnet, dass** ein Füllstandsensor für den Behälter (25) für die zu reinigende Flüssigkeit vorgesehen ist.

39. Vorrichtung nach einem der vorgenannten Ansprüche, **dadurch gekennzeichnet, dass** ein getakteter Vorschub des Filterbandes (19) vorgesehen ist.

40. Vorrichtung nach einem der vorgenannten Ansprüche, **dadurch gekennzeichnet, dass** eine Aufnahme für ein streifenförmiges Vlies nach dem einmaligen Durchlauf durch die Filtervorrichtung vorgesehen ist.

41. Vorrichtung nach einem der vorgenannten Ansprüche, **dadurch gekennzeichnet, dass** der einmalige Durchlauf eines Vlieses mit und/oder ohne Abreinigung des Vlieses vorgesehen ist.

42. Vorrichtung nach einem der vorgenannten Ansprüche, **dadurch gekennzeichnet, dass** ein umschaltbare Filterbandführung zum wahlweisen Einsatz von endlosem Filterband und Filtervlies für den einmaligen Durchlauf vorgesehen ist.
